# EUROPÄISCHE PATENTSCHRIFT

(11) **EP 2 162 714 B1**
(45) Veröffentlichungstag und Bekanntmachung des Hinweises auf die Patenterteilung: **24.02.2016**
(21) Anmeldenummer: 08760463.3
(22) Anmeldetag: 04.06.2008
(51) Int. Cl.: G01L 9/00, G01L 13/02

(54) **KAPAZITIVER DRUCKSENSOR**
CAPACITIVE PRESSURE SENSOR
CAPTEUR DE PRESSION CAPACITIF

(30) Priorität: 04.06.2007 DE 102007026243
(43) Veröffentlichungstag der Anmeldung: 17.03.2010
(73) Patentinhaber: Endress+Hauser GmbH+Co. KG, 79689 Maulburg (DE)
(72) Erfinder: HEGNER, Frank, 79540 Lörrach (DE); ROSSBERG, Andreas, 79713 Bad Säckingen (DE); DREWES, Ulfert, 79379 Müllheim (DE); SCHMIDT, Elke, 79713 Bad Säckingen (DE); STOLLE, Sabine, 01219 Dresden (DE); KRETSCHMAR, Christel, 01809 Dohria (DE); HENTSCHE, Melanie, 01159 Dresden (DE)
(74) Vertreter: Andres, Angelika Maria
(86) Internationale Anmeldenummer: PCT/EP2008/056880
(87) Internationale Veröffentlichungsnummer: WO 2008/148779

(56) Entgegenhaltungen:
- JP-A- 2 109 314
- JP-A- 58 011 565
- US-A- 3 929 609
- US-A- 3 944 696
- US-A- 4 225 632
- US-A- 4 567 151
- US-A- 5 877 934
- US-A1- 2002 046 861
- US-B1- 6 374 680
- WANG W H ET AL: "Bulk metallic glasses" MATERIALS SCIENCE AND ENGINEERING R: REPORTS, ELSEVIER SEQUOIA S.A., LAUSANNE, CH, Bd. 44, Nr. 2-3, 1. Juni 2004 (2004-06-01), Seiten 45-89, XP004509211 ISSN: 0927-796X

## Beschreibung

Die vorliegende Erfindung betrifft einen kapazitiven Drucksensor.

Kapazitive Drucksensoren umfassen einen biegesteifen Grundkörper und eine elastische Messmembran, die unter Bildung einer am Rand dicht abgeschlossenen Messkammer mit einer Oberfläche des Grundkörpers gefügt ist, wobei
der Grundkörper und/oder die Messmembran Keramik, Glas oder ein einkristallines Material als Werkstoff aufweisen,
die Messmembran mindestens eine erste Elektrode aufweist, die der Oberfläche des Grundkörpers zugewandt ist,
die Oberfläche des Grundkörpers mindestens eine zweite Elektrode aufweist, die der der Messmembran zugewandt ist, und
die Kapazität zwischen der ersten Elektrode und der zweiten Elektrode ein Maß für den zu messenden Druck ist.

Typische Elektrodenmaterialien sind Metalle, die auf den Grundkörper oder die Messmembran abgeschieden, insbesondere aufgedampft oder aufgesputtert werden. Hierzu kommt beispielsweise Tantal in Frage, welches mit einem Hochvakuumlötprozess kompatibel ist, der eingesetzt wird um den Grundkörper und die Messmembran beispielsweise mittels eines Aktivhartlots zu verbinden.

Die gattungsgemäßen Drucksensoren sind in unterschiedlichen Graden feuchteempfindlich, da selbst auf einer makroskopisch glatten keramischen Oberfläche noch viele Defekte zur Adsorption von Wassermolekülen vorhanden sind. Um die Feuchtabhängigkeit zu vermindern, können die Oberflächen in der Messkammer hydrophobiert und/oder mit einer Glasschicht überzogen werden.

Auf diese Weise lassen sich grundsätzlich Drucksensoren mit einer akzeptablen Feuchtempfindlichkeit herstellen, wobei es einen weiteren Beitrag zur Feuchteempfindlichkeit gibt, der mit den beschriebenen Maßnahmen nur bedingt beherrschbar, ist. Genauere Untersuchungen haben nämlich gezeigt, dass im Randbereich der Elektroden keine scharfe Grenze zwischen Elektrode und blankem Substrat zu finden ist, sondern dass isolierte Inseln bzw. Cluster von Elektrodenmaterial außerhalb des angestrebten Randes der Elektrodenfläche vorkommen. Eine der Ursachen für die Clusterbildung außerhalb des angestrebten Randes der Elektrodenfläche könnte in den Masken zu finden sein, mit denen die Grundkörper bzw, die Messmembranen beim Aufsputtern oder Aufdampfen des Elektrodenmaterials abgedeckt sind. Wenn Masken nicht hinreichend dicht abschließen, kann Elektrodenmaterial in durch die Masken abgedeckten Bereiche der Oberfläche gelangen und dort zu Clustern aggregieren.

Die an sich isolierten Cluster können bereits durch geringe Mengen von adsorbierten Wassermolekülen vernetzt werden, und somit zur Gesamtkapazität der Elektroden beitragen. Dies führt zu einer Beeinträchtigung der Messgenauigkeit.

Weiterhin neigen Elektroden aus Tantal dazu, bei hohen Temperaturen, beispielsweise über 180°C thermische Oxide auszubilden, welche ebenfalls die wirksamen Flächen der Elektroden verändern und damit die Messgenauigkeit beeinträchtigt

US Patent Nr. 6 374 680 offenbart einen Differenzdrucksensor, bei dem Elektroden aus plattenförmige Metallkörpern jeweils in einer Vertiefung eines Grundkörpers befestigt werden. Diese Vorgehensweise ist aufwändig und bis heute nicht in einem Produkt realisiert.

US Patent Nr. 4 225 632 offenbart ein Verfahren zum Herstellen eines kapazitiven Wandlers. Der kapazitive Wandler besteht einem kreisförmigen Grundkörper und aus einer kreisförmigen Membran, welche jeweils eine Kondensatorelektrode tragen, und welche durch einen gleichmäßigen als Glasfritte aufgetragenen Glasisolierring, der einen gleichmäßigen Abstand zwischen den Kondensatorelektroden vorgibt, gefügt sind. Die Elektroden werden in Dichtschichttechnik in einer Mischung aus Metallpartikeln, Glasfritte, organischem Binder und Lösungsmittel aufgetragen. Die Vakuumbeständigkeit bei hohen Temperaturen ist jedoch nicht berücksichtigt.

Es ist daher die Aufgabe der vorliegenden Erfindung, einen gegenüber dem Stand der Technik verbesserten Drucksensor bereitzustellen.

Die Aufgabe wird erfindungsgemäß gelöst durch den Drucksensor gemäß des unabhängigen Patentanspruchs 1.

Der erfindungsgemäße Drucksensor umfasst:
einen im wesentlichen biegesteifen Grundkörper und mindestens eine elastische Messmembran, die unter Bildung einer am Rand dicht abgeschlossenen Messkammer mit einer Oberfläche des Grundkörpers gefügt ist, wobei
der Grundkörper und/oder die Messmembran Keramik, Glas oder ein einkristallines Material als Werkstoff aufweisen,
die Messmembran mindestens eine erste Elektrode aufweist, die der Oberfläche des Grundkörpers zugewandt ist,
die Oberfläche des Grundkörpers mindestens eine zweite Elektrode aufweist, die der der Messmembran zugewandt ist, wobei
die Kapazität zwischen der ersten Elektroden und der zweiten Elektrode ein Maß für den zu messenden Druck ist; dadurch gekennzeichnet, dass
mindestens eine der ersten und zweiten Elektroden eine leitfähige Schicht aufweist, die zwei Edelmetalle und Glas enthält,
wobei die Edelmetalle Gold und Platin umfassen
wobei das Glas bei 900°C hochvakuumstabil ist, und abgesehen von ggf. vorhandenen Verunreinigungen kein Blei und/oder kein Bor enthält.

In einer Ausgestaltung der Erfindung weist die leitfähige Schicht ein Verhältnis der Volumenanteile des Metalls zu Glas von beispielsweise nicht mehr als 4:1 vorzugsweise nicht mehr als 3:1, weiter bevorzugt nicht mehr als 2,5:1, und besonders bevorzugt nicht mehr als 2,3:1 auf. Weiterhin weist die leitfähige Schicht beispielsweise ein Verhältnis der Volumenanteile von Metall zu Glas von nicht weniger als 1,5:1 vorzugsweise nicht weniger als 1,8:1 weiter bevorzugt nicht weniger als 2,1:1 auf.

In einer derzeit bevorzugten Ausgestaltung der Erfindung weist die leitfähige Schicht ein Volumenverhältnis von Edelmetall zu Glas von etwa 2,2:1 auf.

In einer ersten Ausgestaltung der Erfindung beträgt das stöchiometrische Verhältnis zwischen Gold zu Platin also das Verhältnis der Anzahl der Goldatome der Anzahl der Platinatome, beispielsweise nicht mehr als 20:1, vorzugsweise nicht mehr als 10:1 und weiter bevorzugt nicht mehr als 5:1. Das stöchiometrische Verhältnis zwischen Gold und Platin beträgt gemäß der ersten Ausgestaltung beispielsweise nicht weniger als 1,5:1, vorzugsweise nicht weniger als 2:1 und weiter bevorzugt nicht weniger als 3:1. In einer derzeit bevorzugten Ausgestaltung der Erfindung beträgt das stöchiometrische Verhältnis zwischen Gold und Platin etwa 4:1.

In einer anderen Ausgestaltung der Erfindung beträgt das stöchiometrische Verhältnis zwischen Platin und Gold beispielsweise nicht weniger als 3,5:1, vorzugsweise nicht weniger als 4:1 und weiter bevorzugt nicht weniger als 5:1.

Erfindungsgemäß umfasst die leitfähige Schicht Glas, welches abgesehen von ggf. vorhandenen Verunreinigungen kein Bleiund/oder kein Bor enthält. B-haltige und/oder Pb-haltige Gläser haben sich aufgrund thermischer Zersetzung, bzw. aufgrund des Abdampfens einiger Komponenten bei hohen Temperaturen unter Vakuum als ungeeignet erwiesen.

In einer Ausgestaltung der Erfindung umfasst die leitfähige Schicht Glas, welches beispielsweise Oxide von Barium, Silizium und/oder Aluminium aufweist.

Beispielsweise enthält das Glas nicht weniger als 45 Masse-% und nicht mehr als 60 Masse-% SiO₂, nicht weniger als 30 Masse-% und nicht mehr als 40 Masse-% BaO, sowie nicht weniger als 8 Masse-% und nicht mehr als 16 Masse-% Al₂O₃.

Bevorzugt enthält das Glas nicht weniger als 50 Masse-% und nicht mehr als 56 Masse-% SiO₂, nicht weniger als 33 Masse-% und nicht mehr als 37 Masse-% BaO, sowie nicht weniger als 10 Masse% und nicht mehr als 14 Masse-% Al₂O₃.

In einer derzeit bevorzugten Ausgestaltung enthält das Glas 53,1 Masse-% SiO₂, 35,1 Masse-% BaO und 11,8 Masse-% Al₂O₃.

Vorzugsweise sollten solche Gläser verwendet werden, die beim Brennen nicht übermäßig auskristallisieren, denn ausgeprägte kristalline Domänen können die Haftfestigkeit beeinträchtigen und zu einer erhöhten Feuchteempfindlichkeit führen.

Das Material der leitfähigen Schicht kann als Paste mittels Siebdruck auf der Oberfläche des Grundkörpers bzw. der Oberfläche der Messmembran aufgebracht werden. Die Paste umfasst die Komponenten der leitfähigen Schicht sowie einen organischen Binder und Lösungsmittel, welche sich nach dem Siebdruck in einem Trocknungsschritt bzw. in einem anschließenden Brennschritt aus dem Material verflüchtigt.

Die Paste kann beispielsweise etwa 1/4 bis 2/5 Massenanteile des organischen Binders und etwa 3/4 bis 3/5 Massenanteile der Metall- und Glasmischung aufweisen. Eine derzeit bevorzugte Paste umfasst etwa 1/3 Massenanteile des organischen Binders und etwa 2/3 Massenanteile der Metall- und Glasmischung.

Die Paste kann beispielsweise Edelmetallpartikel mit einer BET-Oberfläche von nicht weniger als 0,08 m^2/g, vorzugsweise nicht weniger als 0,12 m^2/g und weiter bevorzugt nicht weniger als etwa 0,25 m^2/g aufweisen. In einer derzeit bevorzugten Paste weisen Au-Partikel eine BET-Oberfläche von etwa 0,3 m^2/g auf. Dies entspricht einer mittleren Korngröße von etwa 1 µm. Entsprechende Anforderungen an die Korngrößen gelten für Pt.

Es können auch feinere Körnungen eingesetzt werden. In einer Paste wurden beispielsweise Pt-Partikel mit einer BET-Oberfäche von 8m^2/g verwendet.

Die Korngröße der Glasbestandteile bzw. des Glases in der Paste kann beispielsweise bis zu 5 µm betragen. In vorzugsweise beträgt die mittlere Korngröße zwischen etwa 0,5 µm und 5 µm.

Der organische Binder kann beispielsweise Ethylcellulose in Terpineol sowie Dibutylphthalat verwendet werden.

Zum Aufbringen der Paste mittels eines Siebdruckverfahrens, kann beispielsweise ein Edelstahlsieb mit 400 mesh bzw. einer Maschenweite von etwa 37 µm eingesetzt werden. Ein Auftrag von mindestens zwei Schichten ist derzeit bevorzugt. Der Absprung kann beispielsweise 0,15 mm bis 0,5 mm betragen.

Die mit Siebdruck aufgetragene Paste kann beispielsweise eine Schichtdicke von nicht mehr als 100 µm vorzugsweise nicht mehr als 50 µm und besonders bevorzugt nicht mehr als 25 µm aufweisen.

Nach dem Auftragen der Paste erfolgt eine Trocknung, beispielsweise bei leicht erhöhter Temperatur zwischen etwa 100°C und 200°C. Derzeit wird eine Trocknungstemperatur zwischen 140°C und 160°C. bevorzugt. Die Dauer der Trocknung hängt u.a. von der Schichtdicke der Paste und der gewählten Temperatur ab. Erfahrungsgemäß sollten aber einige Minuten bis zu einer viertel Stunde Trocknungszeit ausreichen.

Nach der Trocknung wird die Schicht eingebrannt, hierzu kann die Temperatur bis zu einer Maximaltemperatur erhöht werden, bei welcher die Schicht für eine vorgebbare Zeit gehalten wird, bevor eine Abkühlung einsetzt. Die Maximaltemperatur während des Brennens beträgt mindestens 900°C, vorzugsweise mindestens etwa 930°C bis 960°C und besonders bevorzugt etwa 950°C. Die Brenndauer kann beispielsweise zwischen einer und zwei Stunden betragen, wobei es ausreicht, wenn die Maximaltemperatur für etwa 10 bis 20 Minuten gehalten wird.

Die resultierende Schichtdicke der gebrannten Schicht beträgt vorzugsweise nicht mehr als 8 µm und weiter bevorzugt nicht mehr als 6µm und besonders bevorzugt nicht mehr als 4 µm.

Die solchermaßen auf keramischen Körpern präparierten leitfähigen Schichten zeichnen sich vorzugsweise dadurch aus, dass sie einen anschließenden Hochvakuumlötprozess mit einem Druck von etwa 10⁻⁶ mbar und Temperaturen von etwa 910°C unbeschadet und ohne Abgabe von Zersetzungsprodukten überstehen. Ein solcher Hochvakuumlötprozess wird beispielsweise dazu eingesetzt, um die keramischen Komponenten eines Sensors mit Aktivhartlot zu fügen. Die Anforderung ist insofern wichtig, als adsorbierte Zersetzungsprodukte des Glases die Benetzbarkeit von freien Oberflächenabschnitten der zu fügenden keramischen Körper in der Weise verändern könnten, dass das Aktivhartlot beim Hochvakuumprozess in diese Oberflächehabschnitte hineinlaufen würde. Damit wäre der Hochvakuumlötprozess nicht mehr durchführbar. Derartige Zersetzungs-produkte wurden insbesondere bei Pb- bzw. B-haltigen Gläsern beobachtet.

Die erfindungsgemäßen Drucksensoren weisen im Ergebnis eine leitfähige Schicht auf, die thermisch stabil ist und sicher an dem Keramiksubstrat haftet.

Die Erfindung wird nun anhand eines in der Zeichnung dargestellten Ausführungsbeispiels erläutert, es zeigt:
Fig. 1: Einen Längsschnitt durch einen erfindungsgemäßen kapazitiven Absolutdrucksensor;
Fig. 2: Einen Längsschnitt durch einen erfindungsgemäßen kapazitiven Zweikammer-Differenzdrucksensor; und
Fig. 3: Einen Längsschnitt durch einen erfindungsgemäßen kapazitiven Einkammer-Differenzdrucksensor;

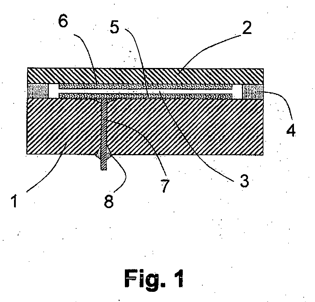

Der in Fig. 1 gezeigte, kapazitive Drucksensor ist ein Absolutdrucksensor. Er umfasst einen im Wesentlichen zylindrischen keramischen Grundkörper 1 und eine Kreisscheibenförmige keramische Messmembran 2, die an einer Stirnseite des Grundkörpers 1 mit diesem unter Bildung einer druckdichten Messkammer 3 verbunden ist. Die Messmembran 2 ist hierzu mit dem Grundkörper 1 mittels eines Aktivlotrings 4 in einem Hochvakuumlötprozess bei 910°C gefügt. Über die Materialstärke des Aktivlotrings ist dabei der Abstand zwischen der Messmembran 2 und der Stirnseite des Grundkörpers 1 vorgegeben. Der Abstand kann nach dem Lötprozess beispielsweise 20 bis 100 µm betragen.

In der Druckkammer 3 ist an der Stirnfläche des Grundkörpers 1 eine erste Elektrode 5 angeordnet und an der messkammerseitigen Oberfläche der Messmembran 2 eine zweite Elektrode 6. Im Messbetrieb wird die Messmembran 2 druckabhängig verformt, wodurch die Kapazität zwischen der ersten und der zweiten Elektrode verändert wird. Die Elektroden umfassen eine leitfähige Schicht aus dem erfindungsgemäßen Elektrodenmaterial.

Die Kontaktierung der Elektroden ist mit beliebigen, dem Fachmann geläufigen Durchführungen möglich. Beispielsweise kann ein Metallstift 7 in eine passende Bohrung durch den Grundkörper 1 eingebracht sein, wobei der Metallstift 7 zusätzlich mit einer Aktivhartlotdichtung abgedichtet und fixiert sein kann. Weiterhin kann eine der Elektroden über die Mantelfläche des Drucksensors mittels des Aktivhartlots kontaktiert werden.

Der erfindungsgemäße Drucksensor kann weiterhin als Relativdruck,- oder Differenzdrucksensor ausgestaltet sein.

Ein Relativdrucksensor weist im Gegensatz zum Absolutdrucksensor einen Referenzluftpfad auf, der beispielsweise eine Bohrung durch den Grundkörper umfassen kann.

Ein Differenzdrucksensor kann als Zweikammerdifferenzdrucksensor oder als Einkammerdifferenzdrucksensor realisiert sein.

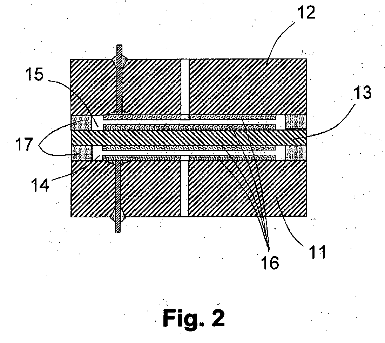

Ein Zweikammerdifferenzdrucksensor ist in Fig. 2 dargestellt. Er umfasst einen ersten zylindrischen Grundkörper 11 und einen zweiten zylindrischen Grundkörper 12 sowie eine Messmembran 13, die jeweils mit einer der Stirnflächen des ersten und des zweiten Grundkörpers unter Bildung einer ersten Messkammer 14 und einer zweiten Messkammer 15 mittels eines Aktivhartlots 17 gefügt ist. Jede der Messkammern weist mindestens eine Messkapazität auf, die jeweils zwischen einer Elektrode 16 an der Messmembran und an der Stirnfläche des jeweiligen Grundkörpers gebildet und über geeignete Durchführungen erfasst wird. Die Elektroden umfassen eine leitfähige Schicht aus dem erfindungsgemäßen Elektrodenmaterial. Die beiden Messkammern werden jeweils über eine Bohrung durch den zugehörigen Grundkörper mit einem Mediendruck beaufschlagt.

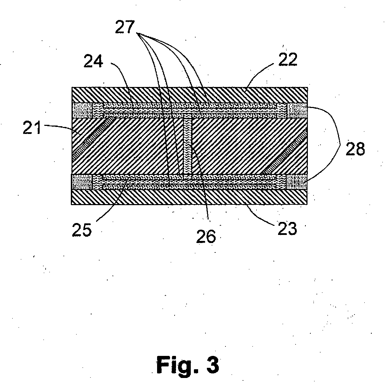

Fig. 3 zeigt schließlich einen kapazitiven Einkammerdifferenzdrucksensor. An den beiden Stirnflächen eines zylindrischen Grundkörpers 21 ist jeweils eine Messmembran mittels eines Aktivhartlots 28 gefügt, wodurch zwischen einer ersten Messmembran 22 und dem Grundkörper eine erste Teilmesskammer 24 wird, und zwischen einer zweiten Messmembran 23 und dem Grundkörper eine zweite Teilmesskammer 25 gebildet wird. Die beiden Teilmesskammern kommunizieren über einen Kanal 26 durch den Grundkörper 21 und sind mit einer Übertragungsflüssigkeit, beispielsweise einem Silikonöl gefüllt. In jeder der Teilmesskammern ist ein Elektodenpaar angeordnet, mit jeweils einer Elektrode an der Messmembran und einer Elektrode an der Stirnseite des Grundkörpers. Die grundkörperseitigen Elektroden werden beispielsweise über Leiter kontaktiert, die sich von der Mantelfläche des Grundkörpers zu den Stirnflächen des Grundkörpers erstrecken.

Die Elektroden weisen eine leitfähige Schicht aus dem erfindungsgemäßen Elektrodenmaterial auf, welches Glas und Metall mit mindestens einem Edelmetallelement oder zwei Edelmetallelementen enthält.

Das Elektrodenmaterial der erfindungsgemäßen Drucksensoren weist in der derzeit bevorzugten Ausgestaltung ein Verhältnis der Metallanteile zu den Glasanteilen von etwa 2,2 Volumenanteilen Metall zu 1 Volumenanteilen Glas auf. Mit steigendem Metallanteil nimmt die Leitfähigkeit zu, wobei die Haftfestigkeit der Schicht abnimmt. Eine gewisse Verminderung der Haftfähigkeit ist vertretbar. Bei abnehmendem Metallanteil sinkt dementsprechend die Leitfähigkeit.

Das derzeit bevorzugte Glas hat in Masseanteilen die folgende Zusammensetzung: 50% bis 56% SiO₂, 33% bis 37% BaO und 10% bis 14% Al₂O₃.

Das Metall weist eine Mischung von Au und Pt in einem Massenverhältnis von etwa 4:1 auf, wobei die Goldpartikel eine mittlere Größe von etwa 0,5 µm bis etwa 1,2 µm und die Pt-Partikel eine mittlere Größe von etwa 0,03 µm bis etwa 0,05 µm aufweisen.

Bei der Herstellung der Elektroden werden die Feststoffe (Glas und Metall) mit einem organischen Binder zu einer Paste gemischt mit einem Feststoffmassenanteil von etwa 2/3 und einem Bindermassenanteil von etwa 1/3.

Die Paste wird mittels Siebdruck in einem oder zwei Durchgängen auf Korundkeramiksubstraten aufgetragen, um die leitfähigen Schichten der Elektroden zu formen. Die Korundkeramiksubstrate sind die Grundkörper und die Messmembranen.

Nach einer Trocknung bei etwa 150°C für etwa 15 Minuten werden die Schichten gebrannt, wobei die Maximaltemperatur des Brennvorgangs etwa 950°C beträgt.

Zur Herstellung eines erfindungsgemäßen Drucksensors werden die Grundkörper und Membranen, welche die erfindungsgemäßen Elektroden aufweisen, in einem Hochvakuumlötprozess mittels Aktivhartlot gefügt.

## Patentansprüche

1. Drucksensor, umfassend:
mindestens einen Grundkörper (1) und mindestens eine elastische Messmembran (2), die unter Bildung einer am Rand dicht abgeschlossenen Messkammer (3) mit einer Oberfläche des Grundkörpers gefügt ist, wobei
der Grundkörper (1) und/oder die Messmembran (2) Keramik, Glas oder ein einkristallines Material als Werkstoff aufweisen,
die Messmembran (2) mindestens eine erste Elektrode (6) aufweist, die der Oberfläche des Grundkörpers (1) zugewandt ist,
die Oberfläche des Grundkörpers (1) mindestens eine zweite Elektrode (5) aufweist, die der Messmembran (2) zugewandt ist, wobei
die Kapazität zwischen der ersten Elektrode und der zweiten Elektrode ein Maß für den zu messenden Druck ist;
mindestens eine der ersten und zweiten Elektroden eine leitfähige Schicht aufweist, die zwei Edelmetalle und Glas enthält, **dadurch gekennzeichnet dass**
die Edelmetalle Gold und Platin umfassen
wobei das Glas bei 900°C hochvakuumstabil ist, und abgesehen von ggf. vorhandenen Verunreinigungen kein Blei und/oder kein Bor enthält.

2. Drucksensor nach Anspruch 1, wobei die leitfähige Schicht ein Verhältnis der Volumenanteile des Metalls zu Glas von nicht mehr als 4:1 vorzugsweise nicht mehr als 3:1, weiter bevorzugt nicht mehr als 2,5:1, und besonders bevorzugt nicht mehr als 2,3:1 aufweist, und wobei die leitfähige Schicht ein Verhältnis der Volumenanteile von Metall zu Glas von nicht weniger als 1,5:1 vorzugsweise nicht weniger als 1,8:1, weiter bevorzugt nicht weniger als 2,1:1 aufweist.

3. Drucksensor nach einem der vorhergehenden Ansprüche, wobei das stöchiometrische Verhältnis zwischen Gold und Platin nicht mehr als 20:1, vorzugsweise nicht mehr als 10:1 und weiter bevorzugt nicht mehr als 5:1 beträgt, sowie nicht weniger als 1,5:1, vorzugsweise nicht weniger als 2:1 und weiter bevorzugt nicht weniger als 3:1 beträgt.

4. Drucksensor nach einem der Ansprüche 1 bis 2, wobei das stöchiometrische Verhältnis zwischen Platin und Gold nicht weniger als 3,5:1, vorzugsweise nicht weniger als 4:1 und weiter bevorzugt nicht weniger als 5:1 beträgt.

5. Drucksensor nach einem der vorhergehenden Ansprüche, wobei die leitfähige Schicht ein Glas umfasst, welches Oxide von Barium, Silizium und/oder Aluminium aufweist, insbesondere nicht weniger als 45 Masse-% und nicht mehr als 60 Masse-% SiO₂, nicht weniger als 30 Masse-% und nicht mehr als 40 Masse-% BaO, sowie nicht weniger als 8 Masse-% und nicht mehr als 16 Masse-% Al₂O₃.

6. Drucksensor nach Anspruch 5, wobei die leitfähige Schicht ein Glas umfasst, welches nicht weniger als 50 Masse-% und nicht mehr als 56 Masse-% SiO₂, nicht weniger als 33 Masse-% und nicht mehr als 37 Masse-% BaO, sowie nicht weniger als 10 Masse-% und nicht mehr als 14 Masse-% Al₂O₃ enthält.

7. Verfahren zum Herstellen eines Drucksensors nach einem der vorhergehenden Ansprüche, wobei das Material der leitfähigen Schicht als Paste mittels Siebdruck auf der Oberfläche des Grundkörpers bzw. der Oberfläche der Messmembran aufgebracht wird.

8. Verfahren nach Anspruch 7, wobei die Paste Edelmetallpartikel mit einer BET-Oberfläche von nicht weniger als 0,08 m^2/g, vorzugsweise nicht weniger als 0,12 m^2/g und weiter bevorzugt nicht weniger als etwa 0,25 m^2/g aufweist.

9. Verfahren nach einem der Ansprüche 7 bis 8, wobei der organische Binder Ethylcellulose in Terpineol oder Dibutylphthalat umfasst.

10. Verfahren nach einem der Ansprüche 7 bis 9, wobei nach dem Auftragen der Paste eine Trocknung erfolgt bei einer Temperatur zwischen etwa 100°C und 200°C.

11. Verfahren nach einem der Ansprüche 7 bis 10, wobei die leitfähige Schicht gebrannt wird in einem Brennprozess mit einer Maximaltemperatur von mindestens 900°C, vorzugsweise mindestens etwa 930°C bis 960°C und besonders bevorzugt etwa 950°C.

12. Verfahren nach einem der Ansprüche 7 bis 11, wobei die keramischen Komponenten eines Drucksensors mit den präparierten leitfähigen Schichten in einem Hochvakuumlötprozess mit einem Druck von nicht mehr als etwa 10^-6 mbar und Temperaturen von nicht weniger als etwa 900°C mit Aktivhartlot gefügt werden.

## Claims

1. Pressure sensor, comprising:
at least one meter body (1) and at least one elastic process isolating diaphragm (2) which is joined to a surface of the meter body by forming a measuring chamber (3) which is tightly sealed at the edge, wherein
the meter body (1) and/or the process isolating diaphragm (2) have ceramic, glass or a monocrystalline substance as the material,
the process isolating diaphragm (2) has at least a first electrode (6) which faces towards the surface of the meter body (1),
the surface of the meter body (1) has at least a second electrode (5) which faces towards the process isolating diaphragm (2), wherein
the capacitance between the first electrode and the second electrode is an indicator of the pressure to be measured;
at least one of the first and second electrodes has a conductive layer which contains two precious metals and glass, **characterized in that**
the precious metals are gold and platinum
wherein at 900°C the glass has high-vacuum stability and, aside from any impurities present, does not contain lead and/or boron.

2. Pressure sensor as claimed in Claim 1, wherein the conductive layer has a ratio of the volume share of metal to glass of not more than 4:1, preferably not more than 3:1, more preferably not more than 2.5: 1 and particularly preferably of not more than 2.3 to 1; and wherein the conductive layer has a ratio of the volume share of metal to glass of not less than 1.5:1, preferably not less than 1.8:1, more preferably not less than 2.1: 1.

3. Pressure sensor as claimed in one of the previous claims, wherein the stoichiometric ratio between gold and platinum is not more than 20:1, preferably not more than 10:1 and more preferably not more than 5:1 and not less than 1.5:1, preferably not less than 2:1 and more preferably not less than 3:1.

4. Pressure sensor as claimed in one of the Claims 1 to 2, wherein the stoichiometric ratio between gold and platinum is not less than 3.5:1, preferably not less than 4:1 and more preferably not less than 5:1.

5. Pressure sensor as claimed in one of the previous claims, wherein the conductive layer comprises a glass featuring oxides of barium, silicon and/or aluminum, particularly not less than 45 mass percent and not more than 60 mass percent SiO₂, not less than 30 mass percent and not more than 40 mass percent BaO, and not less than 8 mass percent and not more than 16 mass percent Al₂O₃.

6. Pressure sensor as claimed in Claim 5, wherein the conductive layer comprises a glass, containing not less than 50 mass percent and not more than 56 mass percent SiO₂, not less than 33 mass percent and not more than 37 mass percent BaO, and not less than 10 mass percent and not more than 14 mass percent Al₂O₃.

7. Procedure for producing a pressure sensor as claimed in one of the previous claims, wherein the material of the conductive layer is applied as a paste on the surface of the meter body and the surface of the process isolating diaphragm by a screen print process.

8. Procedure as claimed in Claim 7, wherein the paste has precious metal particles with a BET surface of not less than 0.08 m^2/g, preferably not less than 0.12 m^2/g and more preferably not less than approximately 0.25 m^2/g.

9. Procedure as claimed in one of the Claims 7 to 8, wherein the organic binder is ethyl cellulose in terpineol or dibutyl phthalate.

10. Procedure as claimed in one of the Claims 7 to 9, wherein following the application of the paste drying takes place at a temperature between 100°C and 200°C.

11. Procedure as claimed in one of the Claims 7 to 10, wherein the conductive layer is burned in a burning process at a maximum temperature of at least 900°C, preferably at least approximately 930°C and particularly preferably approximately 950°C.

12. Procedure as claimed in one of the Claims 7 to 11, wherein the ceramic components of a pressure sensor with the prepared conductive layers are joined with active brazing solder in a high-vacuum solder process with a pressure of not more than approximately 10^-6 bar and temperatures of not less than approximately 900°C.

## Revendications

1. Capteur de pression, comprenant
au moins un corps de base (1) et au moins une membrane de mesure élastique (2), laquelle est jointe à la surface du corps de base en formant une chambre de mesure (3) fermée de façon étanche au bord, capteur pour lequel
le corps de base (1) et/ou la membrane de mesure présentent comme matériau de la céramique, du verre ou une matière monocristalline,
la membrane de mesure (2) comporte au moins une première électrode (6) faisant face à la surface du corps de base (1),
la surface du corps de base (1) comporte au moins une deuxième électrode (5) faisant face à la membrane de mesure (2),
la capacité entre la première électrode et la deuxième électrode est proportionnelle à la pression à mesurer,
au moins l'une parmi la première et la deuxième électrode présente une couche conductrice contenant deux métaux précieux et du verre, **caractérisée en ce que** les métaux précieux contiennent de l'or et du platine,
le verre étant résistant au vide poussé à 900 °C et, à l'exception des éventuelles impuretés présentes, ne contenant pas de plomb ni de bore.

2. Capteur de pression selon la revendication 1, pour lequel la couche conductrice présente un rapport des parts de volume entre le métal et le verre au maximum de 4:1, de préférence au maximum de 3:1, particulièrement de préférence au maximum de 2,5:1 et tout particulièrement de préférence au maximum de 2,3:1, et pour lequel la couche conductrice présente un rapport des parts de volume entre le métal et le verre au minimum de 1,5:1, de préférence au minimum de 1,8:1 et particulièrement de préférence au minimum de 2,1:1.

3. Capteur de pression selon l'une des revendications précédentes, pour lequel le rapport stoechiométrique entre l'or et le platine est au maximum de 20:1, de préférence au maximum de 10:1 et particulièrement de préférence de 5:1, ainsi qu'au minimum de 1,5:1, de préférence au minimum de 2:1 et particulièrement de préférence de 3:1.

4. Capteur de pression selon l'une des revendications 1 à 2, pour lequel le rapport stoechiométrique entre le platine et l'or est au maximum de 3,5:1, de préférence au maximum de 4:1 et particulièrement de préférence au maximum de 5:1.

5. Capteur de pression selon l'une des revendications précédentes, pour lequel la couche conductrice comprend un verre contenant des oxydes de baryum, de silicium et/ou d'aluminium, notamment au minimum 45 % en masse et au maximum 60 % en masse de SiO₂, au minimum 30 % en masse et au maximum 40 % en masse de BaO, ainsi qu'au minimum 8 % en masse et au maximum 16 % en masse de Al₂O₃.

6. Capteur de pression selon la revendication 5, pour lequel la couche conductrice comprend un verre contenant au minimum 50 % en masse et au maximum 56 % en masse de SiO₂, au minimum 33 % en masse et au maximum 37 % en masse de BaO, ainsi qu'au minimum 10 % en masse et au maximum 14 % en masse de Al₂O₃.

7. Procédé destiné à la fabrication d'un capteur de pression selon l'une des revendications précédentes, pour lequel le matériau de la couche conductrice est appliqué sous forme de pâte par sérigraphie sur la surface du corps de base ou sur la surface de la membrane de mesure.

8. Procédé selon la revendication 7, pour lequel la pâte contient des particules de métaux précieux avec une surface BET au minimum de 0,08 m²/g, de préférence au minimum de 0,12 m²/g et particulièrement de préférence au minimum de 0,25 m²/g.

9. Procédé selon l'une des revendications 7 à 8, pour lequel le liant organique comprend de l'éthylcellulose dans du terpinéol ou du dibutylphtalate.

10. Procédé selon l'une des revendications 7 à 9, pour lequel a lieu, après l'application de la pâte, un séchage à une température comprise entre 100 °C et 200 °C.

11. Procédé selon l'une des revendications 7 à 10, pour lequel la couche conductrice est cuite dans le cadre d'un processus de cuisson à une température maximale d'au moins 900 °C, de préférence d'au moins 930 °C à 960 °C et particulièrement de préférence d'environ 950 °C.

12. Procédé selon l'une des revendications 7 à 11, pour lequel les composants céramiques d'un capteur de pression sont joints aux couches conductrices préparées au moyen d'une brasure active dans le cadre d'un processus de soudage sous vide poussé, avec une pression maximale de 10⁻⁶ mbar et des températures minimales d'env. 900 °C.
